# EUROPÄISCHE PATENTSCHRIFT

(11) **EP 1 493 527 B1**
(45) Veröffentlichungstag und Bekanntmachung des Hinweises auf die Patenterteilung: **05.07.2006**
(21) Anmeldenummer: 04090181.1
(22) Anmeldetag: 06.05.2004
(51) Int. Cl.: B23K 26/30, B21C 37/12, G01N 23/04, G01N 29/00, B23K 31/12

(54) **Verfahren und Einrichtung zur Herstellung geschweisster Schraubennahtrohre aus Warmbandstahl**
Method and device for manufacturing a helicoidal welded tube made of hot rolled steel
Méthode et dispositif de fabrication d'un tube en acier laminé à chaud et soudé hélicoidalement

(30) Priorität: 03.07.2003 DE 10331000
(43) Veröffentlichungstag der Anmeldung: 05.01.2005
(73) Patentinhaber: Salzgitter Mannesmann GmbH, 38239 Salzgitter (DE)
(72) Erfinder: Titze, Eberhard, 06804 Muldenstein (DE); Werner, Klaus, 06804 Muldenstein (DE); Keitel, Steffen, 06120 Halle (DE)
(74) Vertreter: Meissner, Peter E.

(56) Entgegenhaltungen:
- DE-A- 2 931 340
- DE-A- 3 818 542
- DE-A- 19 840 804
- DE-C- 3 050 682
- FR-A- 2 513 151
- US-A- 2 391 499
- US-A- 3 557 335
- US-A- 5 524 038
- PATENT ABSTRACTS OF JAPAN Bd. 1999, Nr. 12, 29. Oktober 1999 (1999-10-29) & JP 11 194103 A (HITACHI ENG & SERVICE CO LTD), 21. Juli 1999 (1999-07-21)

## Beschreibung

Die Anmeldung betrifft ein Verfahren Anspruch 1 und eine Einrichtung zur Herstellung geschweißterter Schraubennahtrohre aus Warmbandstahl gemäß dem Oberbegriff der Anspruchs 13 (siehe, z. B., DE-A-29 31 340).

Geschweißte Großrohre können längsnahtgeschweißte Rohre oder Schraubennahtrohre sein. Schraubennahtrohre werden im Durchmesserbereich von ca. 400 mm bis 3050 mm bei Wanddicken von 5 mm bis 30 mm hergestellt.

Bei Schraubennahtrohren handelt es sich um Rohre, die aus Warmband oder Blech in einer Formeinrichtung schraubenlinienförmig mit gleichbleibendem Krümmungsradius kontinuierlich zum Rohr geformt werden, wobei die zusammenlaufenden Bandkanten miteinander ver schweißt werden.

Im Gegensatz zur Längsnahtrohrfertigung, in der jeder Rohrdurchmesser eine bestimmte Blechbreite voraussetzt, zeichnet sich die Fertigung von Schraubennahtrohren dadurch aus, dass sich aus einer Band- bzw. Blechbreite unterschiedliche Rohrdurchmesser fertigen lassen.

Der Einlaufwinkel des Bandes in die Formgebungseinheit kann verändert werden. Je kleiner der Einlaufwinkel (bei gleichbleibender Bandbreite), desto größer wird der Rohrdurchmesser.

Große Leitungsrohrprojekte, und hier speziell Wasserleitungsprojekte, liegen zukünftig immer häufiger in Regionen mit hohem Bevölkerungswachstum. Oftmals sind diese Regionen noch durch große Wasserknappheit und schlecht entwickelte Infrastruktur gekennzeichnet. Große Zeit- und Kostenaufwendungen hinsichtlich Transporttechnik und Logistik sind die Folge. Häufig leiden die Staaten in diesen Regionen wegen schwieriger Wirtschaftsverhältnisse noch unter starker Devisenknappheit, was zu Überlegungen führt, Importe zu vermeiden und den Anteil der Eigenleistungen im Lande zu erhöhen.

Aus diesem Grunde wird in diesen Staaten vermehrt über eigene Fertigungsmöglichkeiten zur Herstellung von Schraubennahtrohren nachgedacht, die in möglichst kurzer Zeit errichtet und in Betrieb genommen werden können. Diese Anlagen haben dann häufig den Charakter von Einzweck-(Projekt)-Anlagen.

Ein Verfahren und eine Einrichtung zur Herstellung geschweißter Schraubennahtrohre wird im Stahlrohr Handbuch (Vulkan-Verlag, Essen, 12. Auflage 1995, S.143-152) beschrieben.

Nach dem Stand der Technik umfasst eine stationäre Einrichtung zur Herstellung unterpulvergeschweißter (UP) Schraubennahtrohre im Wesentlichen folgende Merkmale:
- Bandeinformung,
- UP-Schweißung,
- US-Prüfung von Schweißnaht und Grundmaterial vor und nach der Schweißung,
- Teilen des Rohrstranges in Einzelrohre,
- Adjustage.

Zur Herstellung des Schraubennahtrohres wird zunächst das zu einem Coil aufgewickelte Warmband abgewickelt und mit dem Ende des zuvor eingesetzten Warmbandes nach entsprechender Bearbeitung verschweißt, so dass quasi ein Endlosband und damit ein kontinuierlich ablaufender Rohrschweißprozess realisiert werden kann. Das Band läuft anschließend durch ein Richtwalzwerk in dem das Band entsprechend den Ebenheitsanforderungen gerichtet wird.

In der Bandkanten-Bearbeitungsanlage werden zunächst die Bandkanten besäumt, d. h. das Band wird auf konstante Breite geschnitten. Gleichzeitig werden durch zusätzliche Werkzeuge (z. B. Fräser oder Schermesser) die Bandkanten für die Schweißung vorbereitet.

Vor der Röhreinformung werden die Bandkanten vorgebogen, um eine Aufdachung im Bereich der Schweißnaht zu vermeiden.

Nach der Rohreinformung werden mittels UP-Schweißung die zusammengeführten Bandkanten zuerst innen in ungefährer 6-Uhr-Position und eine halbe Rohrwindung weiter in 12-Uhr-Position auf der Rohraußenseite verbunden.

Alternativ kann die Rohreinformung auch mit einer Heftschweißung kombiniert werden, wobei das geheftete Rohr danach auf separaten Schweißständen innen und außen fertig geschweißt wird.

Unmittelbar im Anschluss wird im Rahmen der Fertigungskontrolle die Schweißnaht mittels Ultraschall auf etwaige Fehler kontrolliert, und dann der Rohrstrang durch eine mitlaufende Rohrtrenneinrichtung in Einzelrohre unterteilt.

Diese werden einer Adjustage zugeführt, wo das geschweißte Schraubennahtrohr zunächst einer visuellen Kontrolle unterzogen wird, um den Zustand des Rohres nach dem eigentlichen Herstellungsprozess zu beurteilen, bevor dieses in den weiteren Fertigungsfluss gebracht wird.

Es folgen die Schritte, Nacharbeitung (falls notwendig), Probennahme für die zerstörende Prüfung, Rohrendenbearbeitung, Wasserdruckprobe des fertiggestellten Rohrkörpers, Ultraschallkontrolle der gesamten Schweißnaht, sowie eine vom Umfang her bedarfsabhängig festzulegende Röntgenprüfung der Schweißnaht.

Es wird deutlich, dass vielfältige Prüf- und Kontrollschrifite die Herstellung UP-geschweißter Schrauben- und auch Längsnahtrohre begleiten, um den hohen Qualitätsanforderungen zu genügen.

Dieser Fertigungsablauf sowie die dabei notwendigen vielfältigen Prüf- und Kontrollschritte kann jedoch nicht mehr als zeitgemäß im Hinblick auf die heutigen technischen Möglichkeiten hinsichtlich Schweißtechnik und fortlaufender Prozesskontrolle angesehen werden. Mit diesem, auf einen dauerhaft stationären Betrieb ausgelegtem Anlagenkonzept, lassen sich die eingangs beschriebenen Anforderungen bzgl. Einzweck-(Projekt)-Änlagen, die in möglichst kurzer Zeit errichtet und in Betrieb genommen werden können, nicht realisieren.

Die Nachteile lassen sich wie folgt zusammenfassen:
- Die sehr lange Fertigungskette mit den vielfältigen Prüf- und Kontrollschritten bindet ein sehr großes und kostenintensives Anlagenvolumen.
- Standortverlagerungen (Mobilität) sind mit diesem Anlagenkonzept nur mit hohem Kosten-und Zeitaufwand zu realisieren.
- Beim Unterpulverschweißprozess entsteht ein relativ großvolumiges Schmelzbad, welches den Einsatz von modernen Systemen zur Qualitätssicherung erschwert.
- Der UP-Prozess bedingt in der Regel einen Y- oder Doppel-Y-Stoß als Kantenvorbereitung. Dies bewirkt in Abhängigkeit von der Blechdicke einen erhöhten Einsatz von Schweißzusatzwerkstoffen (Schweißdraht und Pulver), was zu den größeren Schmelzbädem, höheren Fehlerrisiken und Schweißkosten führt.
- Die Größe des Schmelzbades behindert abhängig vom Rohrdurchmesser (Krümmung der Rohrwand), eine Erhöhung der Schweißgeschwindigkeit. Dies gilt besonders für dünnerwandige Rohre.
- Das UP-Schweißverfahren bewirkt eine deutliche Schweißnahtüberhöhung an der Innen-und Außennaht, die sich nachteilig auf eine spätere Rohraußen- und Innenbeschichtung auswirkt. Die Schweißnahtüberhöhung bewirkt einerseits einen höheren Verbrauch an Beschichtungsmaterial, andererseits besteht Beschädigungsgefahr der Rohraußenbeschichtung im Bereich der Schweißnahtüberhöhung bei Transport- und Handhabungsvorgängen.

Aufgabe der Erfindung ist es, ein Verfahren und eine Einrichtung zur Herstellung geschweißter Schraubennahtrohre anzugeben, mit dem die Nachteile des nach dem Stand der Technik bekannten Anlagenkonzeptes überwunden werden können.

Diese Aufgabe wird nach den Shritten Verfahrenanspruchs 11 gelöst. Vorteilhafte Weiterbildungen sowie sind Gegenstand von Unteransprüchen. Diese Aufgabe wird auch nach dem Merkmalen des Einrichtungsanspruch 13 gelöst.

Nach der Lehre der Erfindung wird zur Lösung dieser Aufgabe ein Verfahren und eine Einrichtung verwendet, bei dem das Schraubennahtrohr mittels Laserschweißen hergestellt wird, und durch integrierte Prozesskontrolle bereits am Ende des eigentlichen Herstellungsprozesses ein maschinenfertiges Qualitätsrohr erzeugt ist.

Erfindungsgemäß führt diese deutliche Verkürzung der Fertigungskette zu einem stark viereinfachten Anlagenkonzept, dergestalt, dass sich die wesentlichen Elemente des Fertigungsverfahrens inklusive fortlaufender Prozesskontrollt- nur noch auf die eigentliche Schweißeinrichtung konzentriert.

Erfindungsgemäß ist dieses Anlagenkonzept modular aufgebaut, wobei die einzelnen Module aus einfach montier- und demontierbaren Hauptbaugruppen bestehen, die eine wesentlich vereinfachte Ortsveränderlichkeit bieten.

Ein Verfahren und ein Gerätesystem zur Herstellung von Schraubennahtrohren mittels Laserschweißen ist aus der DE 19758001 C2 bekannt.

Beschrieben werden darin die Grundlagen für die schweißtechnische Herstellung eines qualitativ hochwertigen Schraubennahtrohres.

Im Wesentlichen werden dabei die qualitativen Voraussetzungen der Bandkantenvorbereitung sowie die Auslegung eines Gerätesystems zum Laserschweißen behandelt, wodurch erreicht werden soll, dass:
- die Nahtform weitestgehend blecheben ausgebildet ist,
- eine feinkömige Gefügeausbildung erfolgt und die Festigkeitseigenschaften der Naht mindestens denen des Grundwerkstoffes entsprechen,
- die Schraubennahtrohre durchgängig zylindrische Rohrkörper darstellen.

Ein maschinenfertiges Qualitätsrohr mit den eingangs beschriebenen Anforderungen an ein weitgehend mobiles Anlagenkonzept, lässt sich damit jedoch noch nicht verwirklichen.

Basierend auf diesem Stand der Technik ist das erfindungsgemäße Verfahren weiterentwickelt worden, so dass eine Implementierung in das erfindungsgemäße Anlagenkonzept für die Herstellung eines maschinenfertigen Schraubennahtrohres realisiert werden kann.

Erfindungsgemäß basieren die verfahrens- und anlagentechnischen Merkmale zur Erreichung der vorgenannten Zielstellung auf:
1. der Neugestaltung der Bandvorbereitung des Warmbandes,
2. einem Laserschweißprozess in Lage-Gegenlagetechnik,
3. einer integrierten Qualitätssicherung, bestehend aus
   - photooptischer Online-Prozessdiagnose,
   - photooptischer Online-Erfassung des Profils der Nahtausbildung,
   - Ultraschallprüfung des Nahtquerschnittes,
   - computertomographischer Erfassung und Auswertung innerer Fehler im Rohr,
4. einer Online-Rohrdurchmesser- und Rohrlängenmessung,
5. einem verkürzten Anlagekonzept in modularer Bauweise.

### zu 1. Neugestaltung der Bandvorbereitung des Warmbandes

Die dieser Erfindung zugrunde liegende Verfahrensidee setzt einen sauber geformten und geglätteten I-Stoß der Bandkanten mit einem Schweißspalt gleich "Null" voraus. Erreicht wird dies durch:
- ebenes Richten des Warmbreitbandes
   - - zweistufiges Richten in Querrichtung über ein Duo-Walzenpaar,
   - - Richten in Längsrichtung über ein Mehrwalzen-Richtwerk,
- vierstufiges Verfahren der Bandkantenvorbereitung zur Erzeugung eines geraden Bandes mit parallelen, schräggestellten Kanten (schräger I-Stoß) mittels
   - - Schruppfräsen oder Scheren,
   - - Schlichtfräsen,
   - - Bürsten im kantennahen Bereich,
   - - Glätten.

Nach dem blechebenen Richten und der Bandkantenvorbereitung wird als erster Schritt zur Qualitätssicherung des Endproduktes das Warmband mittels Ultraschalltechnik zerstörungsfrei auf Fehlerfreiheit über die gesamte Länge und Breite geprüft.

Danach wird das Warmband mit den bearbeiteten Bandkanten mittels der bekannten Führungs- und Steuerungssysteme schraubenlinienförmig so zusammengeführt, das diese spaltfrei und wenige Grad vor der 6-Uhr-Position zusammenlaufen. In dieser Position erfolgt dann die Laserinnenschweißung.

Zur Begünstigung dieses Vorganges werden die Bandkanten mit einer leichten Vorbiegung versehen, um so ein versatz- und spaltfreies Zusammengleiten der Bandkanten zu begünstigen. Das versatzfreie Zusammenlaufen der Bandkanten wird durch ein speziell für diesen Zweck gestaltetes Rollenwerkzeug im Schweißpunkt der 6-Uhr-Position unterstützt.

Die nicht mehr vorhandene bzw. nur noch sehr geringe Überhöhung im direkten Bereich der inneren und äußeren Schweißnaht macht ebenfalls auch eine präzisere Anbiegung der Bandkanten zur Vermeidung des Kantenversatzes und der Dachbildung im Bereich der Schweißnaht notwendig. Damit wird die zylindrische Gestalt des Rohres entscheidend gefördert.

### zu 2. Laserschweißprozess in Lage-Gegenlagetechnik

Zum Einsatz können sowohl CO₂- als auch Festkörperlaser oder alle Laserarten, die aufgrund ihrer Leistung für den Einsatz bei der Großrohrfertigung infrage kommen, gelangen.

Erfindungsgemäß hat die Laserschweißung in Lage-Gegenlagetechnik einen bedeutenden Vorteil für die Ausbildung der Nahtüberhöhung, sowohl auf der Rohrinnen- als auch auf der Rohraußenseite. Dies bewirkt eine gute, zerstörungsfrei prüfbare Oberflächenkontur der Schweißnaht.

Die Führung des inneren, als auch des äußeren Laserstrahles auf dem Schweißspalt erfolgt mittels Sensoren. Hier ist im Gegensatz zum bislang eingesetzten UP-Schweißverfahren eine äußerst genaue Führung der Laserstrahlköpfe notwendig, um diese genau zentrisch über den Schweißspalt zu führen und somit beide Bandkanten gleichmäßig zu erfassen. Femer ist die Steuerung der Laserstrahlköpfe so gestaltet, dass diese sowohl quer zum Schweißspalt, als auch in der Höhenlage verfahren werden können. Des Weiteren kann der Schweißkopf um wenige Grad geneigt werden, um den Laserstrahl optimal auf den Schweißspalt auszurichten.

Die äußere Gestalt der Schweißnaht ist abhängig von der Verwendung von Schweißdraht als Zusatzwerkstoff. Von Einfluss hierbei ist der Drahtdurchmesser und die Drahtzuführgeschwindigkeit. Der Schweißdraht kann bedarfsweise beim Schweißen der inneren oder äußeren oder beider Nähten zugeführt werden. Die verwendeten Drahtdurchmesser liegen dabei weit unter den bislang beim UP-Prozess gebräuchlichen.

Die exakte Drahtzuführung in das Zentrum des Laserstrahles ist von hoher Wichtigkeit für die Qualität der Schweißverbindung. Entsprechendes gilt für die Schutzgaszuführung.

Wegen der Wärmeentwicklung werden die Sensoren und die Drahtführung ausreichend gekühlt und entsprechend den Anforderungen des Fertigungsprozesses robust konstruiert.

Zur Erreichung einer kompletten Durchschweißung über den gesamten Querschnitt des Warmbandes, ist es unabdingbar, dass die Energie der Laserquellen so aufeinander abgestimmt eingesetzt wird, dass eine Überdeckung der inneren und äußeren Schweißnaht von etwa mindestens einem Millimeter erreicht wird.

Erfindungsgemäß arbeitet der Innenlaser in 6-Uhr-Position unmittelbar nach dem Zusammentreffen der Bandkanten und der Außenlaser nachlaufend, um 180° versetzt in 12-Uhr-Position.

Entsprechend der zur Verfügung stehenden Laserenergie kann in Abhängigkeit von der zu verschweißenden Wanddicke und den erforderlichen Nahteigenschaften die Schweißgeschwindigkeit flexibel angepasst werden.

### zu 3. Integrierte Qualitätssicherung

Neben der vollständigen US-Prüfung des Warmbandes vor der Schweißung wird erfindungsgemäß der Schweißprozess selbst über ein photooptisches Online-Prozessdiagnosesystem überwacht.

Störungen im Schweißbad haben Auswirkungen auf die Ausbildung des laserinduzierten Plasmas und dessen Temperatur.

Detektoren am Schweißkopf führen eine fortlaufende Erfassung der Intensität des Plasmaleuchtens eines bestimmten Bereiches der Lichtwellenlänge im Schweißpunkt und der Temperatur nachlaufend auf der Schweißnaht durch.

Aus einem stetigen Vergleich dieser Daten in Verbindung mit definierten Daten aus einem Einlemprozess kann auf Unregelmäßigkeiten im Ablauf des Schweißvorganges als zunächst einem Element der Prozessdiagnose geschlossen werden.

Das Profil der Nahtausbildung wird erfindungsgemäß photooptisch mittels Laserlinienscanner erfasst und über eine Auswertekamera bezogen auf eine Ideallinie ausgewertet. Hiermit können äußere Schweißnahtfehler dedektiert werden.

Die Dedektierung von inneren Fehlern der Schweißnaht wird mittels der bekannten US-Prüftechnik durchgeführt.

Über eine Verkettung der Daten der zuvor beschriebenen Kontrollsysteme kann eine zuverlässige Aussage über die Qualität der erzeugten Schweißnaht getroffen werden, so dass sich vorteilhaft alle bisher angewandten weitere Prüfverfahren erübrigen.

### zu 4. Online Rohrdurchmesser- und Rohrlängenmessung

Eine weitere Online-Prüfeinrichtung überwacht ständig fortlaufend den erzeugten Rohrdurchmesser und signalisiert rechtzeitig das Erreichen der Toleranzgrenzen. Die ebenfalls online arbeitende Rohrlängenmessung erfasst die erzeugte Rohrlänge und steuert entsprechend die mitlaufende Trennanlage, die einzelne Rohrschüsse vom fortlaufend entstehenden Rohrstrang abtrennt.

Unmittelbar in Verbindung mit dem Auslauf der Laserschweißanlage ist eine Rohrenden-Bearbeitungsanlage in das neue Anlagenkonzept integriert, mit der die vom Kunden gewünschte Rohrendenform angearbeitet werden kann.

### zu 5. Verkürztes Anlagenkonzept in modularer Bauweise

Die vorbeschriebene Konzeption zur Schweiß- und Qualitätssicherungstechnik zeigt auf, dass der Umfang der Anlagentechnik bei dieser neuen Technologie in ganz wesentlicher Weise reduziert und auf die eigentliche Laserschweißeinrichtung beschränkt werden kann. Ein Sachverhalt, der somit die Voraussetzung für ein modernes und leicht standortveränderbares Anlagenkonzept bietet.

Die konstruktive Gestaltung der Einrichtung zur Fertigung von Schraubennahtrohren wird modular aufgebaut, so dass diese sich einfach in Hauptbaugruppen zerlegen lässt und mit geringem Zeitaufwand am Ende eines größeren Auftrages demontiert und an anderer Stelle wieder aufgestellt werden kann.

Die Energieversorgung kann bei Bedarf über mobile Stromerzeugungsanlagen modular gestaltet werden.

Die eigentliche Fertigungshalle als Wetterschutz, wie auch Hebezeuge, sind ebenfalls Bestandteil dieses modularen Konzeptes. Lediglich eine Fundamentplatte bleibt als verlorene Einheit am alten Standort zurück.

Zusammenfassend lässt sich das erfindungsgemäße Verfahren in folgende wesentliche Arbeitsschritte gliedern:
- Entcoilen des Warmbandes,
- Verbinden des Bandanfanges mit dem Bandende des Vorlaufbandes,
- zweistufiges Richten des Warmbandes auf Ebenheit in Querrichtung,
- Richten des Warmbandes auf Ebenheit in Längsrichtung,
- Ultraschall-Prüfung der Gesamtfläche des Warmbandes und insbesondere der Bandkanten,
- vierstufiges Bearbeiten der Bandkanten,
- Vorbiegen der Bandkanten,
- Einformen des Warmbandes zu einem geschlitzten Schraubennahtrohr,
- Verschweißen der Bandkanten von der Innen- und Außenseite des Schraubennahtrohres mittels Laser,
- Online-Prozessdiagnose des Schweißprozesses,
- Online-Rohrdurchmesser-Messung,
- Online-Erfassung des Profils der Nahtausbildung,
- computertomographische Erfassung und Auswertung von Rohrinnenfehlem,
- Ultraschall-Prüfung der Schweißnaht.

Die Vorteile dieses Verfahrens und der Einrichtung lassen sich wie folgt zusammenfassen:
- Durch den Einsatz neuester Qualitätssicherungstechnik ist es möglich, die ordnungsgemäße Funktion des Schweißprozesses und die fertige Schweißnaht gezielt zu überwachen und diese Informationen mit denen der zerstörungsfreien Werkstoffprüfung logisch so zu verknüpfen, dass daraus eine zuverlässige Qualitätsaussage gebildet werden kann, die es ermöglicht, auf die gegenwärtig noch üblichen weiteren Prüf- und Kontrollmaßnahmen verzichten zu können.
- Das neu eingesetzte Laserschweißverfahren in Lage-Gegenlagetechnik hat den Vorteil, dass weit weniger flüssiges Schweißbad als beim UP-Schweißen entsteht und das Risiko der Fehlerentstehung durch Turbulenzen und Verunreinigungen im Schmelzbad, bei der Erstarrung und bei Begrenzung der möglichen Schweißgeschwindigkeit durch Verlaufen des Schweißbades, hervorgerufen durch die Rohrwandkrümmung, vermieden werden. Das neue Verfahren bietet unabhängig vom Rohrdurchmesser die Möglichkeit der vollen Ausnutzung der Laserenergie für die Schweißgeschwindigkeit in Abhängigkeit von der Blechdicke.
- Reduzierung der durchschnittlichen Fehlergröße bedingt durch das geringe Nahtvolumen auf etwa ein Zehntel der bislang vom UP-Prozess her bekannten.
- Das Anlagenkonzept kann aufgrund der neuen Konzeption wesentlich verkürzt und in modularer Bauweise flexibel und mobil gestaltet werden.
- Möglichkeit zur Erzeugung eines maschinenfertigen qualitätsgerechten Endlosstranges. Dieser kann mit bekannten Rohrstrang-Veriegeverfahren direkt verlegt werden, wobei auf die aufwändige Herstellung eines Stranges aus miteinander verschweißten Rohreinzelstücken verzichtet werden kann.
- Möglichkeit der Rohrherstellung als Strang auf einem Verlegeschiff.
- Erzeugung eines geschweißten Großrohres mit besserer zylindrischer Innen- und Außenkontur, wobei die Innen- und Außenfläche des Rohres nicht durch die umlaufende Kontur einer Schweißnahtüberhöhung wie beim UP-Verfahren unterbrochen bzw. gestört wird.

Weitere Merkmale, Vorteile und Einzelheiten der Erfindung ergeben sich aus der nachfolgenden Beschreibung von einem in einer Zeichnung dargestellten Ausführungsbeispiel eines findungsgemäßen Anlagenkonzeptes.

Es zeigen:
- **Figur 1**: Layout des erfindungsgemäßen Anlagenkonzeptes,
- **Figur 2a**: wie Figur 1, als Ausschnitt in einer vergrößerten Darstellung,
- **Figur 2b**: wie Figur 2a, aber ein weiterer Ausschnitt.

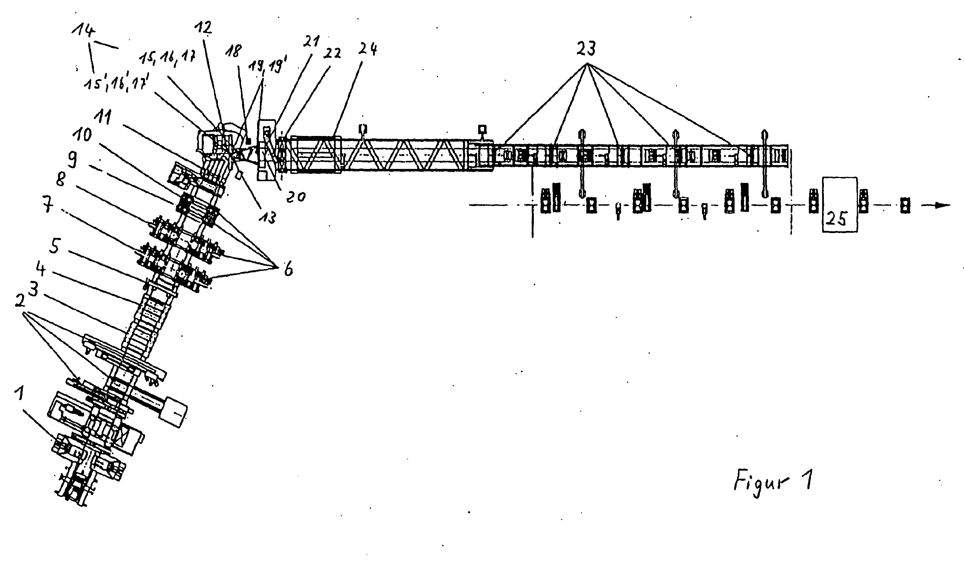

In **Figur 1** ist das Anlagenkonzept zur Herstellung eines maschinenfertig, lasergeschweißten Großrohres aus Warmbandstahl dargestellt.

Das als Coil aufgewickelte Warmband wird zunächst auf einem Warmbandentcoiler 1 abgewickelt und der Warmbandanfang bis zu einer Schweißmaschine 2 vorgezogen und mit dem Ende eines bereits in der Schweißmaschine 2 im Vorlauf befindlichen Warmbandes zur Herstellung einer Bandverbindungsnaht verschweißt, so dass über die Herstellung eines "Endlosbandes" ein weitgehend kontinuierlich ablaufender Schweißprozess realisiert werden kann.

In einer aus einem zweistufigen Duo-Walzenpaar 3 bestehenden Baugruppe wird das Warmband anschließend beim Durchlaufen in Querrichtung auf Ebenheit gerichtet.

Danach durchläuft das Warmband ein Mehrwalzen-Richtwerk 4, in dem das Band in Längsrichtung auf Ebenheit gerichtet wird. Mit diesem Richtwerk lässt sich ein die Streckgrenze des Bandes deutlich übersteigendes Strecken und Stauchen verwirklichen. Damit werden Spannungen und Verformungen in Längs- und Querrichtung des Bandes weitestgehend abgebaut.

Mit einer anschließenden Ultraschall-Prüfeinrichtung 5 wird die Gesamtfläche des Warmbandes und auch speziell die zur Verschweißung kommenden Bandkanten auf Ungänzen überprüft.

Im Rahmen einer vierstufig arbeitenden Bandkanten-Bearbeitungsanlage 6 werden zur Herstellung eines planparallelen Bandes die Bandkanten in Abhängigkeit von der Blechdicke, durch Bandkanten-Schruppfräser 7 bearbeitet. Alternativ können auch Kreismesserscheren zum Einsatz kommen.

Es folgt die Feinbearbeitung über einen Bandkanten-Schlichtfräser 8, wobei der durch das Fräsen an den Bandkanten entstehende Grat durch eine Bandkanten-Bürsteinrichtung 9 mit umlaufenden Kreisbürsten entfernt wird.

In einer Bandkanten-Glättmaschine 10 werden gehärtete Nutrollen gegen die Bandkanten gepresst und die gefrästen Bandkanten soweit geglättet, wie es für ein optimiertes Gleiten der Bandkanten zueinander beim Einformprozess notwendig ist.

Ziel ist, dass der von den beiden Bandkanten gebildete Schweißstoß einen Nullspalt ohne Hohlraum darstellt, um so optimale geometrische Ausgangsbedingungen für die Laserschweißung zu schaffen. Zur Unterstützung des Gleitvorganges werden die Bandkanten deshalb vorteilhaft schräg zur Bandoberfläche bearbeitet.

In einer sich anschließenden Bandkanten-Vorbiegemaschine 11 werden die Kanten des Warmbandes vorgebogen, um die Dachbildung im Bereich der Schweißnaht zu minimieren.

In einer nachfolgenden Einformanlage 12 wird das Band in einer Drei-Watzen-Biegeeinrichtung mit äußerem Stützkäfig zu einem Rohr eingeformt. Hierbei werden die Bandkanten in 6-Uhr-Position durch eine vertikal verstellbare, genutete Schweißstützrolle 13 getragen, womit der Bandkantenversatz wesentlich beeinflusst werden kann. Die in die Schweißstützrolle 13 eingebrachte Nut wird zum Innenschweißpunkt so eingestellt, dass durch den Schweißspalt durchfallendes Schweißgut in diese Nut fällt und nicht auf der Oberfläche der Schweißstützrolle 13 anhaftet.

In einer Laserschweißanlage 14 ist für die Innennaht- und Außennahtschweißung je ein Laserschweißkopf 15 bzw. 15' angeordnet. Jeder dieser Schweißköpfe ist dreidimensional verfahrbar und in Schweißnahtlängsrichtung schwenkbar angeordnet. Die Laserschweißköpfe 15, 15' sind als gekühlte Kompaktschweißköpfe ausgebildet und bestehen jeweils aus einer Laser-Fokussiereinrichtung, einem damit fest verbundenen Nahtnachführungssensor 16 bzw.16' sowie ebenfalls damit fest verbundenen Sensoren 17 bzw.17' für die Online-Prozessdiagnose und die Konstanthaltung der Fokuslage sowie der Zuführeinrichtung für den Schweißdraht.

In einer berührungslos und mit einer Regelungseinheit automatisiert arbeitenden Durchmesser-Messeinrichtung 18 wird das fertig geschweißte Rohr kontinuierlich vermessen, wobei die Durchmesser-Messeinrichtung 18 mit Signalgebern ausgestattet ist, die bei Erreichen bestimmter Grenzwerte ein Regelsignal abgeben.

In einem dem Schweißprozess nachlaufenden photooptischen Nahterfassungssystem 19 wird die äußere Nahtform der Innen- und Außennaht vermessen und bewertet.

Im Auslauf der Rohrschweißmaschine ist eine online arbeitende computertomographische Prüfeinheit 20 angeordnet. In dieser wird der gesamte Rohrkörper bei Bedarf sowohl im eigentlichen Grundmaterial (Warmband) , als auch in der Schweißnaht auf innenliegende Fehler geprüft und ein entsprechendes Prüfprotokoll erstellt.

Mit einer Ultraschall-Prüfeinrichtung 21 wird anschließend die Schweißnaht auf Längs- und Querfehler geprüft.

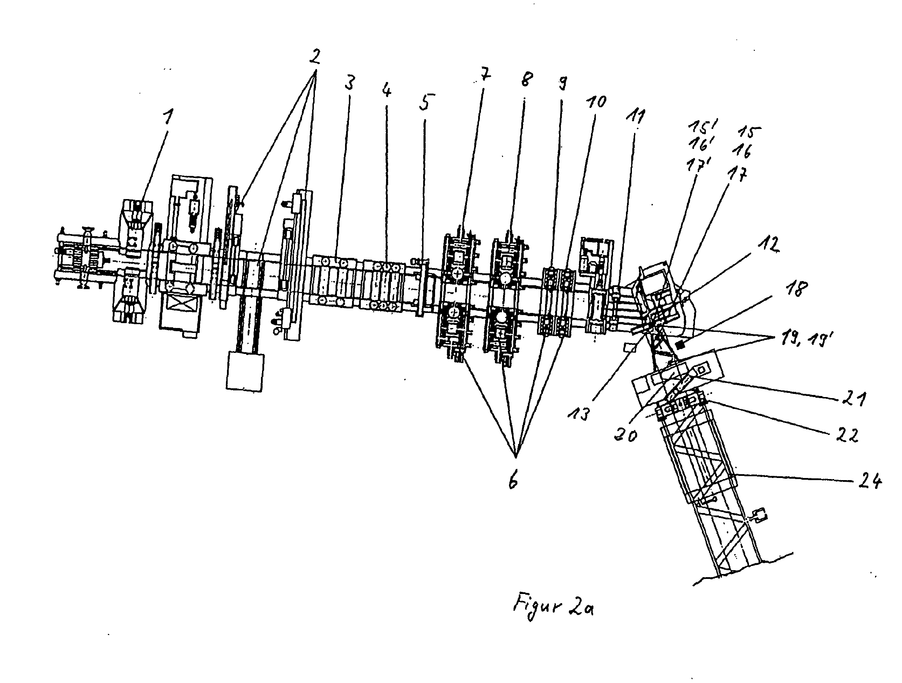

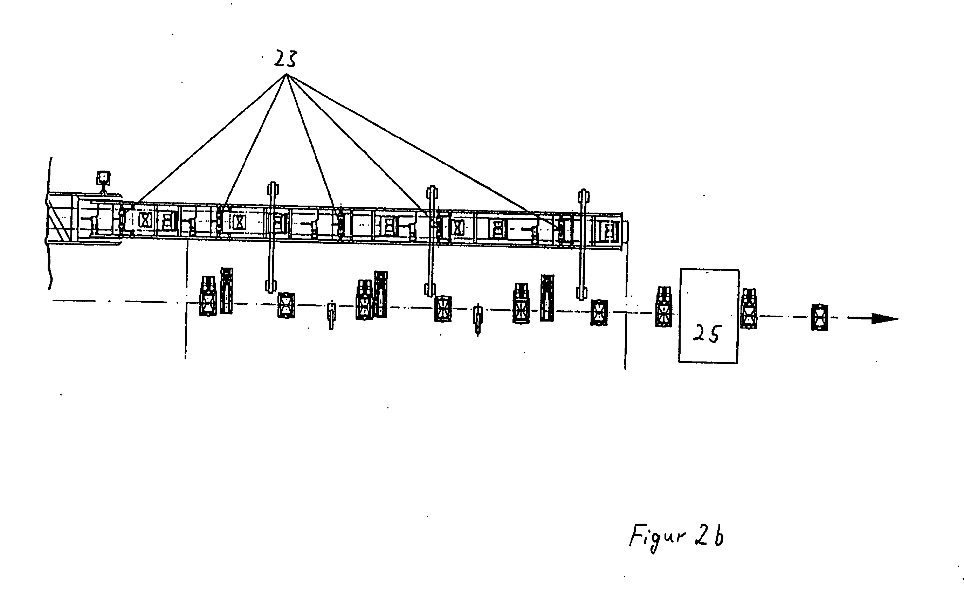

Aus Gründen der Übersichtlichkeit ist in den Figuren 2a und 2b das vorbeschriebene Anlagenkonzept in Form vergrößerter Ausschnitte noch einmal dargestellt.

Die aus den Prüfsystemen
- Ultraschallprüfung des Grundmaterials mit Randzonenprüfung,
- Online-Prozessdiagnose innen,
- nachlaufende optische Fehlererkennung innen,
- Online-Prozessdiagnose außen,
- nachlaufende optische Fehlererkennung außen,
- Durchmesser-Messeinrichtung,
- computertomographische Qualitätskontrolle, Ultraschallprüfung der Schweißnaht
in einem hier nicht dargestellten Zentralrechner ankommenden Prüfergebnisse werden miteinander verglichen und anhand vorliegender Prüfmuster bewertet. Alle so kontrollierten Rohrabschnitte werden mit "brauchbar" oder "fehlerhaft" bewertet und bei "fehlerhaft" an der äußeren Rohroberfläche als solche markiert. Gleichermaßen wird ein Fehler nach Art und Lage im Prüfbericht automatisch registriert.

Der geschweißte und geprüfte Rohrstrang wird im Lünett 22 geführt und durch Absenkböcke 23 getragen. Eine Rohrtrennanlage 24 mit Längenmesseinrichtung trennt optional die Rohre in der gewünschten Länge vom Endlosstrang ab. Als Trennverfahren kommen sowohl thermische, wie auch mechanische Trennverfahren in Betracht.

Das abgetrennte Rohr wird abgesenkt und längs ausgefahren oder quer ausgeworfen. Mit einer im unmittelbaren Anschluss daran aufgestellten Rohrenden-Bearbeitungsanlage 25 wird eine den Kundenanforderungen entsprechende Endenbearbeitung der Rohre durchgeführt.

Alternativ kann auch auf die Trennung des Rohrstranges in Einzelrohre verzichtet werden, wenn sich die Anlage beispielsweise auf einem Verlegeschiff befindet und der Rohrstrang kontinuierlich verlegt werden soll.

### Bezugszeichenliste

| **Nr.** | **Bezeichnung** |
|---|---|
| 1 | Warmbandentcoiler |
| 2 | Schweißmaschine (Bandverbindungsnaht) |
| 3 | zweistufiges Duo-Walzenpaar |
| 4 | Mehrwalzen-Richtwerk |
| 5 | Ultraschall-Bandprüfanlage |
| 6 | Bandkanten-Bearbeitungsanlage |
| 7 | Bandkanten-Schruppfräser |
| 8 | Bandkanten-Schlichtfräser |
| 9 | Bandkanten-Bürsteinrichtung |
| 10 | Bandkanten-Glättmaschine |
| 11 | Bandkanten-Vorbiegemaschine |
| 12 | Einformanlage |
| 13 | Schweißstützrolle |
| 14 | Laserschweißanlage |
| 15,15' | Laserschweißköpfe innen/außen |
| 16, 16' | Nachführsensor innen/außen |
| 17, 17' | photooptisches Online-Prozessdiagnosesystem innen/außen |
| 18 | Messeinrichtung zur Rohrdurchmesserkontrolle |
| 19 | photooptisches Nahterfassungsystem |
| 20 | computertomographische Prüf- und Auswerteeinheit |
| 21 | Ultraschall- (US-) Prüfeinrichtung |
| 22 | Lünette |
| 23 | Absenkbock |
| 24 | Rohrtrennanlage |
| 25 | Rohrenden-Bearbeitungsanlage |

## Patentansprüche

1. Verfahren zur Herstellung von geschweißten Schraubernnahtrohren aus Warmbandstahl, im Abmessungsbereich von 400 - 3050 mm Außendurchmesser und einer Wanddicke von 5 - 30 mm mit den nachfolgenden Arbeitssch ritten:
- Entcoilen des Warmbandes,
- Verbinden des Bandanfanges mit dem Bandende des Vorlaufbandes,
- zweistufiges Richten des Warmbandes auf Ebenheit in Querrichtung,
- Richten des Warmbandes auf Ebenheit in Längsrichtung,
- Ultraschall-Prüfung der Gesamtfläche des Warmbandes einschließlich Randzonenprüfung der Bandkantenbereiche,
- vierstufiges Bearbeiten der Bandkanten,
- Vorbiegen der Bandkanten,
- Einformen des Warmbandes zu einem geschlitzten Schraubennahtrohr,
- Verschweißen der Bandkanten von der Innen- und Außenseite des Schraubennahtrohres mittels Laser,
- Online-Prozessdiagnose des Schweißprozesses,
- Online-Rohrdurchmesser-Messung,
- Online-Erfassung des Profils der Nahtausbildung,
- computertomographische Erfassung und Auswertung von Rohrinnenfehlem,
- Ultraschall-Prüfung der Schweißnaht.

2. Verfahren nach Anspruch 1
**dadurch gekennzeichnet,**
**dass** der Ultraschall-Prüfung der Schweißnaht ein Inline-Trennen des Rohrstranges in einzelne Rohrschüsse folgt mit einer abschließenden Bearbeitung der Rohrenden.

3. Verfahren nach Anspruch 2
**dadurch gekennzeichnet,**
**dass** das Inline-Trennen des Rohrstranges mittels Plasmaschneiden erfolgt.

4. Verfahren nach Anspruch 1 und 2
**dadurch gekennzeichnet,**
**dass** die vierstufige Bearbeitung der Bandkanten mit den Arbeitsschritten:
- Schruppfräsen oder Scheren,
- Schlichtfräsen,
- Bürsten,
- Glätten
erfolgt.

5. Verfahren nach Anspruch 4
**dadurch gekennzeichnet,**
**dass** die Bandkanten schräg zu ihrer Oberfläche bearbeitet werden.

6. Verfahren nach Anspruch 1
**dadurch gekennzeichnet,**
**dass** die Online-Diagnose des Schweißprozesses auf photooptischem Wege erfolgt.

7. Verfahren nach Anspruch 1
**dadurch gekennzeichnet,**
**dass** die Online-Erfassung des Profils der Nahtausbildung auf photooptischem Wege erfolgt.

8. Verfahren nach Anspruch 1
**dadurch gekennzeichnet,**
**dass** die Stärke der beiden Laserstrahlen so aufeinander abgestimmt werden, dass eine Überdeckung der Außen- und Innennaht von mindestens einem Millimeter erreicht wird.

9. Verfahren nach einem der Ansprüche 1-8
**dadurch gekennzeichnet,**
**dass** der auf die Rohrinnen- und auf die Rohraußenseite auftreffende Laserstrahl während des Schweißprozesses auf den, einen Schweißspalt bildenden, Bandkanten nachgeführt wird.

10. Verfahren nach einem der Ansprüche 1 - 9
**dadurch gekennzeichnet,**
**dass** der auf die Rohrinnenseite auftreffende Laserstrahl in 6-Uhr-Position unmittelbar nach dem Zusammentreffen der Bandkanten bei der Einformung auf den Schweißspalt trifft.

11. Verfahren nach einem der Ansprüche 1 - 10
**dadurch gekennzeichnet,**
**dass** der auf die Rohraußenseite auftreffende Laserstrahl um 180 ° versetzt zum auf die Rohrinnenseite auftreffenden Laserstrahl in 12-Uhr-Position auf den Schweißspalt trifft.

12. Verfahren nach einem der Ansprüche 1 - 11
**dadurch gekennzeichnet,**
**dass** während des Schweißprozesses Zusatzwerkstoff dem Schweißspalt zugeführt wird.

13. Einrichtung zur Herstellung von geschwißten Schraubennahtrohren aus Warmbandstahl im Abmessungsbereich von 400-3050 mm Auβendurchmesser und eine Wanddicke von 5-30 mm zur Durchführung des Verfahrens nach Anspruch 1 bestehend aus:
- Warmbandentcoiler (1),
- Schweißmaschine (2) zur Herstellung der Bandverbindungsnaht,
- Bandeinformanlage (12), kenngezeichnet durch; zweistufiges Duo-Walzenpaar (3) zum Richten des Warmbandes in Querrichtung,
- Mehrwalzen-Richtwerk (4) zum Richten des Warmbandes in Längsrichtung,
- Ultraschall-Bandprüfanlage (5),
- Bandkanten-Bearbeitungsanlage (6),
- Bandkanten-Vorbiegemaschine (11),
- Laserschweißanlage (14),
- photooptisches Online-Prozessdiagnosesystem (17, 17') für den Schweißprozess,
- Messeinrichtung (18) zur Durchmesserkontrolle des fertig geschweißten Rohres,
- photooptisches Nahterfassungssystem (19) für die Innen- und Außennaht,
- computertomographische Prüf- und Auswerteeinheit (20),
- Uttraschall-Prüfeinrichtung (21) für die Schweißnaht.

14. Einrichtung nach Anspruch 13,
**dadurch gekennzeichnet,**
**dass** der Ultraschall-Prüfeinrichtung (21) für die Schweißnaht eine Rohrtrennanlage (24) und eine Rohrenden-Bearbeitungsanlage (25) nachgeschaltet sind.

15. Einrichtung nach Anspruch 14,
**dadurch gekennzeichnet,**
**dass** die Rohrtrennanlage (24) eine Plasmaanlage ist.

16. Einrichtung nach Anspruch 13 und 14
**dadurch gekennzeichnet,**
**dass** die Einrichtung modular, bestehend aus einfach montier- und demontierbaren Hauptbaugruppen, aufgebaut ist.

17. Einrichtung nach Anspruch 13 und 14
**dadurch gekennzeichnet,**
**dass** die Bandkanten-Bearbeitungsanlage (6) aus vier Vorrichtungen
- Bandkanten-Schruppfräser (7) oder Schermesser,
- Bandkanten-Schlichtfräser (8),
- Bandkanten-Bürsteinrichtung (9),
- Bandkanten-Glättmaschine (10) besteht.

18. Einrichtung nach Anspruch 13 und 14
**dadurch gekennzeichnet,**
**dass** die Laserschweißanlage (14) aus je einem Laserschweißkopf (15, 15') für die innen- und Außennaht besteht.

19. Einrichtung nach Anspruch 18
**dadurch gekennzeichnet,**
**dass** die Laserschweißköpfe (15, 15') dreidimensional verfahrbar und in Schweißnahtlängsrichtung schwenkbar angeordnet sind.

20. Einrichtung nach den Ansprüchen 13, 18 und 19
**dadurch gekennzeichnet,**
**dass** in die Laserschweißanlage (14) Sensoren zur Strahlnachführung bezogen auf die zu verschweißenden Bandkanten integriert sind.

21. Einrichtung nach den Ansprüchen 13, 18 und 19
**dadurch gekennzeichnet,**
**dass** das photooptische Nahterfassungssystem (19) für die Innen- und Außennaht aus je einem Laserlinienscanner und einer Auswertekamera besteht.

## Claims

1. Method for manufacturing helicoidally welded tubes made of hot-rolled steel, within the size range of 400 - 3050 mm external diameter and with a wall thickness of 5 - 30 mm, having the following operational stages:
- uncoiling the hot-rolled strip
- joining the start of the strip to the end of the previous strip
- two-stage levelling of the hot-rolled strip for transverse levelness
- levelling the hot-rolled strip for lengthwise levelness
- ultrasonic testing of the whole area of the hot-rolled strip, including rim zone testing of the strip edge areas
- four-stage processing of the strip edges
- pre-bending the strip edges
- shaping the hot-rolled strip into an open-seam helicoidal seam tube
- welding the strip edges from the inside and outside of the helicoidal seam tube using lasers
- online process diagnosis of the welding process
- online measurement of tube diameter
- online detection of the profile of the weld formation
- computer tomographic detection and evaluation of defects inside the tube
- ultrasonic testing of the weld

2. Method as in claim 1,
**characterised in that**
the ultrasonic testing of the weld follows after the in-line cutting of the tube into separate sections, with a final machining of the ends of the tube.

3. Method as in claim 2,
**characterised in that**
the inline cutting of the tube is carried out by means of plasma cutting.

4. Method as in claim 1 and 2,
**characterised in that**
the four-stage machining of the strip edges is carried out using the following stages:
- rough milling or cutting
- finish milling
- brushing
- smoothing

5. Method as in claim 4,
**characterised in that**
the strip edges are machined at an angle to their surface.

6. Method as in claim 1,
**characterised in that**
the online diagnosis of the welding process is carried out by photo-optic means.

7. Method as in claim 1,
**characterised in that**
the online detection of the profile of the weld formation is carried out by photo-optic means.

8. Method as in claim 1,
**characterised in that**
the intensities of the two laser beams are coordinated with each other in such a manner that an overlap of the external and internal seams of at least one millimetre is achieved.

9. Method as in one of claims 1 to 8,
**characterised in that**
the laser beam that strikes the inside and outside of the tube is guided, during the welding process, on the strip edge that forms a weld gap.

10. Method as in one of claims 1 to 9,
**characterised in that**
the laser beam that strikes the inside of the tube strikes the weld gap in the six o'clock position immediately after the band edges are brought together in the forming process.

11. Method as in one of claims 1 to 10,
**characterised in that**
the laser beam that strikes the outside of the tube strikes the weld gap in the twelve o'clock position at an angle of 180° to the laser beam that strikes inside of the tube.

12. Method as in one of claims 1 to 11,
**characterised in that**
filler metal is supplied to the weld gap during the welding process.

13. Device for manufacturing helicoidally welded tubes made of hot-rolled steel, within the size range of 400 - 3050 mm external diameter and with a wall thickness of 5 - 30 mm, for the implementation of the method as given in claim 1, comprising:
- a hot-rolled strip uncoiler (1)
- a welding machine (2) to produce the strip joining weld
- a strip forming machine (12) **characterised by**:
- a two-stage two-high roller set (3) to level the hot-rolled strip transversely
- a multi-roller leveller (4) to level the hot-rolled strip lengthwise
- an ultrasonic strip testing unit (5)
- a strip edge machining installation (6)
- a strip edge pre-bending machine (11)
- a laser welding unit (14)
- a photo-optic online process diagnosis system (17, 17') for the welding process
- a measuring device (18) for checking the diameter of the pipe after welding is complete
- a photo-optic weld checking system (19) for the inside and outside weld
- a computer tomography testing and evaluation unit (20)
- an ultrasonic testing device (21) for the weld

14. Device as in claim 13,
**characterised in that**
a tube cutting machine (24) and a tube end machining unit (25) are downstream of the ultrasonic testing device (21) for the weld.

15. Device as in claim 14,
**characterised in that**
the tube cutting machine (24) is a plasma machine.

16. Device as in claim 13 and 14,
**characterised in that**
the device is modular and is made up of principal sub-assemblies which can be readily assembled and dismantled.

17. Device as in claim 13 and 14,
**characterised in that**
the strip edge machining installation (6) is made up of four devices:
- a strip edge roughing mill (7) or shearing knife
- a strip edge finishing mill (8)
- a strip edge brushing machine (9)
- a strip edge smoothing machine (10)

18. Device as in claim 13 and 14,
**characterised in that**
the laser welding unit (14) is made up of one laser welding head (15, 15') each for the inside and outside welds.

19. Device as in claim 18,
**characterised in that**
the laser welding heads (15, 15') can be moved in three dimensions and can be swivelled in the lengthwise direction of the weld.

20. Device as in claims 13, 18 and 19,
**characterised in that**
sensors for tracking the beam in relation to the strip edges that are to be welded are incorporated into the laser welding unit (14).

21. Device as in claims 13, 18 and 19,
**characterised in that**
the photo-optic weld checking system (19) for the inside and outside weld is made up in each case of a laser line scanner and an evaluation camera.

## Revendications

1. Procédé de fabrication de tubes soudés à soudure hélicoïdale dans du feuillard laminé à chaud, dans la plage de dimensions allant de 400 à 3050 mm de diamètre extérieur et de 5 à 30- mm d'épaisseur de paroi, comprenant les étapes de fabrication suivantes :
- déroulement du feuillard à chaud,
- liaison du début du feuillard avec l'extrémité de la bande amorce,
- dressage en deux étapes du feuillard à chaud pour la planéité dans le sens transversal
- dressage du feuillard à chaud pour la planéité dans le sens longitudinal
- contrôle par ultrasons de toute la surface du feuillard à chaud, y compris contrôle des rives des zones de bord du feuillard,
- usinage des bords du feuillard en quatre étapes,
- précintrage des bords du feuillard,
- formage du feuillard à chaud en un tube à soudure hélicoïdale fendu,
- soudage au laser des bords du feuillard de la face intérieure et extérieure du tube à soudure hélicoïdale,
- diagnostic de processus en ligne du processus de soudage,
- mesure en ligne du diamètre du tube,
- détection en ligne du profil de formation de la soudure,
- détection et évaluation par tomographie par ordinateur de défauts intérieurs du tube,
- contrôle par ultrasons de la soudure.

2. Procédé selon la revendication 1,
**caractérisé en ce que** le contrôle par ultrasons de la soudure est suivi d'une séparation en ligne de la ligne de tube en différents tronçons de tubes avec un usinage final des extrémités de tubes.

3. Procédé selon la revendication 2,
**caractérisé en ce que** la séparation en ligne de la ligne de tube a lieu au moyen d'un découpage au jet de plasma.

4. Procédé selon les revendications 1 et 2,
**caractérisé en ce que** l'usinage en quatre étapes des bords du feuillard comprend les étapes suivantes :
- dégrossissage à la fraise ou cisaillage,
- fraisage de finition,
- brossage,
- polissage.

5. Procédé selon la revendication 4,
**caractérisé en ce que** les bords du feuillard sont usinés à l'oblique par rapport à leur surface.

6. Procédé selon la revendication 1,
**caractérisé en ce que** le diagnostic en ligne du processus de soudage est réalisé par voie photo-optique.

7. Procédé selon la revendication 1,
**caractérisé en ce que** la détection en ligne du profil de formation de la soudure est réalisée par voie photo-optique.

8. Procédé selon la revendication 1,
**caractérisé en ce que** les intensités des deux faisceaux laser sont accordées l'une à l'autre de manière à obtenir un chevauchement de la soudure extérieure et intérieure d'au moins un millimètre.

9. Procédé selon l'une des revendications 1 à 8,
**caractérisé en ce que** le faisceau laser arrivant sur la face intérieure et sur la face extérieure du tube pendant le processus de soudage est balayé sur les bords qui forment un écartement.

10. Procédé selon l'une des revendications 1 à 9,
**caractérisé en ce que** le faisceau laser arrivant sur la face intérieure du tube arrive sur l'écartement des bords de soudure dans la position de 6 heures juste après la rencontre des bords du feuillard lors du formage.

11. Procédé selon l'une des revendications 1 à 10,
**caractérisé en ce que** le faisceau laser arrivant sur la face extérieure du tube arrive sur l'écartement des bords de soudure dans la position de 12 heures, décalé de 180° par rapport au faisceau laser arrivant sur la face intérieure du tube.

12. Procédé selon l'une des revendications 1 à 11,
**caractérisé en ce que** du métal d'apport est amené à l'écartement des bords de soudure pendant le processus de soudage.

13. Dispositif de fabrication de tubes soudés à soudure hélicoïdale en feuillard à chaud dans la plage de dimensions allant de 400 à 3050 mm de diamètre extérieur et de 5 à 30 mm d'épaisseur de paroi pour la mise en oeuvre du procédé selon la revendication 1, comprenant : .
- un dérouleur de feuillard à chaud (1),
- une machine à souder (2) pour réaliser la soudure d'assemblage du feuillard,
- une installation de formage du feuillard (12),
**caractérisé par**
- une paire de cylindres duo à deux étages (3) pour le dressage du feuillard à chaud dans le sens transversal,
- une machine de dressage à plusieurs cylindres (4) pour le dressage du feuillard à chaud dans le sens longitudinal,
- une installation de contrôle du feuillard par ultrasons (5),
- une installation d'usinage des bords du feuillard (6)
- une machine à précintrer les bords du feuillard (11),
- une installation de soudage au laser (14),
- un système de diagnostic de processus en ligne photo-optique (17, 17') pour le processus de soudage,
- un dispositif de mesure (18) pour le contrôle de diamètre du tube soudé terminé,
- un système de détection de soudure photo-optique (19) pour la soudure intérieure et extérieure,
- une unité de contrôle et d'évaluation par tomographie par ordinateur (20),
- un dispositif de contrôle par ultrasons (21) pour la soudure.

14. Dispositif selon la revendication 13,
**caractérisé en ce qu'**une installation de séparation de tube (24) et une installation d'usinage des extrémités de tube (25) sont montées en aval du dispositif de contrôle par ultrasons (21) pour la soudure.

15. Dispositif selon la revendication 14,
**caractérisé en ce que** l'installation de séparation de tube (24) est une installation à plasma.

16. Dispositif selon les revendications 13 et 14,
**caractérisé en ce que** le dispositif est conçu de façon modulaire, composé de groupes principaux faciles à monter et à démonter.

17. Dispositif selon les revendications 13 et 14,
**caractérisé en ce que** l'installation d'usinage des bords du feuillard (6) se compose de quatre dispositifs :
- fraiseuse de dégrossissage des bords du feuillard (7) ou outil de cisaillage,
- fraiseuse de finition des bords du feuillard (8),
- dispositif de brossage des bords du feuillard (9),
- polisseuse des bords du feuillard (10).

18. Dispositif selon les revendications 13 et 14,
**caractérisé en ce que** l'installation de soudage au laser (14) se compose d'une tête de soudage au laser (15, 15') pour la soudure intérieure et extérieure.

19. Dispositif selon la revendication 18,
**caractérisé en ce que** les têtes de soudage au laser (15, 15') sont agencées mobiles dans trois dimensions et de manière à pouvoir pivoter dans le sens longitudinal de la soudure.

20. Dispositif selon les revendications 13, 18 et 19,
**caractérisé en ce que** des capteurs pour balayer les faisceaux par rapport aux bords du feuillard à souder sont intégrés dans l'installation de soudage au laser (14).

21. Dispositif selon les revendications 13, 18 et 19,
**caractérisé en ce que** le système de détection de soudure photo-optique (19) pour la soudure intérieure et extérieure se compose d'un scanner laser linéaire et d'une caméra d'évaluation.
